# EUROPÄISCHE PATENTANMELDUNG

(11) **EP 3 477 750 A1**
(43) Veröffentlichungstag der Anmeldung: **01.05.2019**
(21) Anmeldenummer: 17198360.4
(22) Anmeldetag: 25.10.2017
(51) Int. Cl.: H01M 4/88, H01M 12/06

(54) **METALL/LUFT-ZELLE SOWIE IHRE HERSTELLUNG**

(71) Anmelder: VARTA Microbattery GmbH, 73479 Ellwangen (DE)
(72) Erfinder: Krebs, Martin, 73494 Rosenberg (DE)
(74) Vertreter: Patentanwaltskanzlei Cartagena

(57) **Zusammenfassung**

Bei einem Verfahren zum Herstellen einer Metall/Luft-Zelle mit einer metallbasierten Anode (103) und einer Luftkathode (102) wird ein hydrophobes Kunststoffsubstrat (107) gebildet, das an einer seiner Oberflächen eine offen liegende metallische Leiterstruktur (110) aufweist. Auf der Oberfläche mit der metallischen Leiterstruktur (110) wird die Luftkathode (102) gebildet. Bei der so hergestellten Metall/Luft-Zelle steht die Luftkathode (102) in unmittelbarem Kontakt mit der offen liegenden metallischen Leiterstruktur (110).

## Beschreibung

Die Erfindung betrifft ein Verfahren zum Herstellen einer Metall/Luft-Zelle mit einer metallbasierten Anode und einer Luftkathode. Weiterhin werden gemäß dem Verfahren herstellbare Metall/Luft-Zellen beschrieben.

Metall/Luft-Zellen enthalten als elektrochemische Aktivkomponenten üblicherweise eine metallbasierte Anode und eine Luftkathode, die durch einen mit einem ionenleitfähigen Elektrolyten getränkten Separator voneinander getrennt sind. Bei der Entladung wird an der Luftkathode Sauerstoff unter Elektrodenaufnahme reduziert. Es entstehen Hydroxidionen, die über den Elektrolyten zur Anode wandern können. Dort wird ein Metall unter Elektronenabgabe oxidiert. Die entstehenden Metallionen reagieren mit den Hydroxidionen ab.

Es existieren sowohl primäre als auch sekundäre Metall/Luft-Zellen. Eine sekundäre Metall/Luft-Zelle wird geladen, indem zwischen der metallbasierten Anode und der Luftkathode eine Spannung angelegt und die beschriebene elektrochemische Reaktion umgekehrt wird. Dabei wird Sauerstoff freigesetzt.

Metall/Luft-Zellen weisen eine relativ hohe Energiedichte auf, weil der Bedarf an Sauerstoff an der Luftkathode durch Luftsauerstoff aus der Umgebung gedeckt werden kann. Das bekannteste Beispiel einer Metall/Luft-Zelle ist die Zink/Luft-Zelle. Diese findet in Knopfzellenform insbesondere als Batterie für Hörgeräte Verwendung.

Als Luftkathode kommen in Metall/Luft-Zellen üblicherweise Gasdiffusionselektroden zum Einsatz. Gasdiffusionselektroden sind Elektroden, in denen die an der elektrochemischen Reaktion beteiligten Stoffe (in der Regel ein Katalysator, ein Elektrolyt und Luftsauerstoff) nebeneinander in fester, flüssiger und gasförmiger Form vorliegen und miteinander in Kontakt treten können. Der Katalysator katalysiert die Reduktion des Luftsauerstoffs bei der Entladung und gegebenenfalls auch die Oxidation von Hydroxidionen bei der Ladung der Zellen.

Am häufigsten kommen in Metall/Luft-Zellen als Luftkathoden kunststoffgebundene Gasdiffusionselektroden zum Einsatz. Solche Gasdiffusionselektroden sind beispielsweise in der DE 37 22 019 A1 beschrieben. In kunststoffgebundenen Gasdiffusionselektroden bildet ein Kunststoffbinder (meist Polytetrafluorethylen, kurz PTFE) eine poröse Matrix aus, in die als Katalysator Partikel aus einem elektrokatalytisch aktiven Material (zum Beispiel aus einem Edelmetall wie Platin oder Palladium oder aus einem Manganoxid) eingelagert sind. Diese müssen die erwähnte Umsetzung von Luftsauerstoff katalysieren können. Die Herstellung solcher Elektroden erfolgt in aller Regel, indem eine Trockenmischung aus dem Binder und dem Katalysator zu einer Folie ausgewalzt wird. Diese kann wiederum in ein Metallnetz oder ein Metallgitter, zum Beispiel aus Nickel, eingewalzt werden. Das Metallnetz bildet eine Leiterstruktur innerhalb der Luftkathode und dient zu ihrer elektrischen Kontaktierung.

Elektrochemische Zellen sind nicht nur durch Zusammenfügen fester Einzelkomponenten herstellbar. Vielmehr gewinnen in den letzten Jahren auch Herstellungsverfahren an Bedeutung, bei denen einzelne Funktionsteile der Zellen, insbesondere ihre Elektroden und mit den Elektroden verbundene elektrische Leiter, mittels eines Druckverfahrens aus einer lösungs- und/oder suspensionsmittelhaltigen Paste hergestellt werden. Solche Zellen sind beispielsweise aus der WO 2006/105966 A1 bekannt. Die Elektroden der dort beschriebenen Zellen sind über einen ionenleitfähigen Elektrolyten miteinander verbunden, wobei dieser in aller Regel durch ein vlies- oder netzartiges Material verstärkt und stabilisiert ist.

Aus der WO 2012/139933 A1 sind Luftkathoden bekannt, die mittels eines Druckverfahrens hergestellt sind. Bei dem beschriebenen Druckverfahren wird zur Herstellung der Luftkathode eine Paste, die neben einem Elektrodenbinder als Katalysator ein geeignetes elektrokatalytisch aktives Material enthält, auf ein Substrat aufgebracht, bei dem es sich bevorzugt um eine mikroporöse Kunststofffolie handelt. Derartige mikroporöse Kunststofffolien weisen häufig stark hydrophobe Eigenschaften auf. Insbesondere bei mikroporösen Teflon-Folien führt dies zu einer in der Regel deutlich zu geringen Haftung der Luftkathode auf dem Substrat.

Der vorliegenden Erfindung lag die Aufgabe zugrunde, Metall/Luft-Zellen bereitzustellen, die einen Verbund aus einem hydrophoben Träger und einer Luftkathode aufweisen, wobei sich der Verbund durch eine verbesserte Haftungzwischen der Luftkathode und dem hydrophoben Träger auszeichnet.

Zur Lösung dieser Aufgabe schlägt die Erfindung das Verfahren mit den Merkmalen des Anspruchs 1 sowie die Metall/Luft-Zelle mit den Merkmalen des Anspruchs 7 vor. Weiterbildungen der Erfindung sind Gegenstand von Unteransprüchen.

Das erfindungsgemäße Verfahren ist zum Herstellen von Metall/Luft-Zellen mit metallbasierten Anoden und Luftkathoden geeignet. Es weist stets die folgenden Schritte auf:
- Es wird ein hydrophobes Kunststoffsubstrat gebildet, das an einer seiner Oberflächen eine offen liegende metallische Leiterstruktur aufweist.
- Auf der Oberfläche mit der metallischen Leiterstruktur wird die Luftkathode der herzustellenden Metall/Luft-Zelle gebildet.

Durch die an der Oberfläche offen liegende metallische Leiterstruktur wird die Hydrophobie der Oberfläche überraschend deutlich abgesenkt, so dass die gebildete Luftkathode deutlich besser auf der Oberfläche haftet.

Metallbasierte Anoden für Metall/Luft-Zellen sind grundsätzlich bekannt. Die gemäß dem Verfahren herzustellenden Metall/Luft-Zellen weisen bevorzugt eine Anode basierend auf Zink, Aluminium, Magnesium oder einer Legierung dieser Metalle auf. Die genannten Metalle sind in der Anode bevorzugt in Form von Partikeln enthalten. In der Regel sorgt ein geeigneter Elektrodenbinder für die strukturelle Integrität der Elektrode.

Besonders bevorzugt ist die erfindungsgemäße Metall/Luft-Zelle ein Zink/Luft-Zelle.

Die herzustellende Luftkathode weist wie die eingangs erwähnten Luftkathoden als Katalysator ein elektrokatalytisch aktives Material auf. Bei diesem handelt es sich insbesondere um ein Edelmetall wie Palladium, Platin, Silber oder Gold und/oder um ein Manganoxid. Betreffend einsetzbare Manganoxide kann beispielsweise auf die bereits erwähnte DE 37 22 019 A1 verwiesen werden.

Bevorzugt wird die Luftkathode der herzustellenden Metall/Luft-Zelle als kunststoffgebundene Gasdiffusionselektrode ausgebildet. Entsprechend den obigen Ausführungen umfasst sie in dieser Ausführungsform bevorzugt eine Matrix aus einem hydrophoben Kunststoff wie beispielsweise dem bereits erwähnten PTFE.

Besonders bevorzugt wird als hydrophobes Kunststoffsubstrat ein schichtförmiges hydrophobes Kunststoffsubstrat bereitgestellt. Das schichtförmige hydrophobe Kunststoffsubstrat ist bevorzugt als Vlies, als Gewebe oder als Folie ausgebildet, insbesondere als hydrophobe Kunststofffolie.

Bevorzugt ist das hydrophobe Kunststoffsubstrat ein mikroporöses Substrat, das durchlässig für Luftsauerstoff ist. Besonders bevorzugt ist das Substrat eine mikroporöse, für Luftsauerstoff durchlässige Kunststofffolie. Besonders gut einsetzbar sind beispielsweise mikroporöse Membranen aus gerecktem Polytetrafluorethylen (ePTFE), die unter dem Handelsnamen Gore-Tex® vertrieben werden.

Zur Bildung der metallischen Leiterstruktur wird besonders bevorzugt ein metallisches Netz oder ein metallisches Gitter bereitgestellt. Bevorzugt besteht die metallische Leiterstruktur aus einem Metall wie Nickel oder aus einer Legierung, beispielsweise einer Nickel-Legierung. Auch Netze und Gitter aus vernickeltem Stahl sind einsetzbar.

Die Bildung des hydrophoben Kunststoffsubstrats mit der offen liegenden metallischen Leiterstruktur kann auf unterschiedliche Arten erfolgen. Besonders bevorzugt wird das metallische Netz oder Gitter in das hydrophobe Kunststoffsubstrat, insbesondere in die hydrophobe Kunststofffolie, eingepresst. Hierzu können beispielsweise eine bandförmige Kunststofffolie, beispielsweise eine bandförmige Gore-Tex® Membran, und ein bandförmiges Streckmetallgitter aus Nickel im Verbund zwischen zwei Walzen durchgeführt werden, deren Abstand geringer ist als die aufsummierte Dicken der Kunststofffolie und des Streckmetallgitters. Dabei wird das Streckmetallgitter in die Oberfläche der Folie eingepresst, auf der es aufliegt. Es resultiert die gewünschte offen liegende metallische Leiterstruktur.

In Abhängigkeit der Dicken der Kunststofffolie und des Streckmetallgitters sowie des Abstands der beiden Walzen kann die metallische Leiterstruktur nach dem Passieren der Walzen mehr oder weniger weit in das hydrophobe Kunststoffsubstrat eingebettet sein.

Grundsätzlich ist es ausreichend wenn die Leiterstruktur an der Oberfläche in mindestens einem Bereich derart offen liegt, dass sie unmittelbar mit der Luftkathode in Kontakt treten kann. Dies ist wichtig, weil die metallische Leiterstruktur nicht nur zur Absenkung der erwähnten Hydrophobie dient sowohl auch zur elektrischen Kontaktierung der Luftkathode erforderlich ist. Ungeachtet dessen kann es aber von Vorteil sein, wenn die Leiterstruktur an der Oberfläche leicht übersteht und dadurch die Rauheit der Oberfläche erhöht. Dies kann die Haftung der Luftkathode auf der Oberfläche noch weiter verbessern.

Besonders bevorzugt wird die Luftkathode mittels eines Druckverfahrens gebildet. Ein erfindungsgemäß besonders bevorzugtes Druckverfahren ist der Siebdruckprozess. Beim Siebdruck handelt es sich bekanntlich um ein Druckverfahren, bei dem Druckpasten durch ein feinmaschiges Gewebe hindurch auf das zu bedruckende Material gepresst werden. An den Stellen des Gewebes, an denen dem Druckbild entsprechend keine Paste aufgedruckt werden soll, werden die Maschenöffnungen des Gewebes undurchlässig gemacht. An den übrigen Stellen soll die Druckpaste dagegen die Maschenöffnungen problemlos durchdringen können.

Eine geeignete Druckpaste zur Bildung der Luftkathode umfasst neben dem bereits erwähnten elektrokatalytisch aktiven Material bevorzugt ein Leitmittel wie Ruß und/oder Graphit sowie insbesondere natürlich ein Lösungs- und/oder Dispergiermittel. Darüber hinaus kann die Druckpaste insbesondere auch noch einen Elektrodenbinder, beispielsweise den erwähnten Kunststoffbinder in partikulärer Form, umfassen.

Auf die Luftkathode kann nach ihrer Bildung noch ein Separator aufgebracht werden. Dieser kann auf die Luftkathode aufgedruckt werden, wie es beispielsweise in der WO 2012/139933 A1 beschrieben ist. Der Separator kann aber auch als separates Bauteil bereitgestellt und auf der Luftkathode angeordnet werden. In diesem Fall handelt es sich bei dem Separator bevorzugt um ein poröses Flächengebilde, insbesondere eine poröse Folie oder um ein Vlies oder ein Filz oder ein textiles Gewebe. Bevorzugt ist der Separator aus einem Kunststoff gefertigt, beispielsweise aus einem Polyolefin oder aus einem Polyester.

Erfindungsgemäß bevorzugt wird das hydrophobe Kunststoffsubstrat samt der darauf aufgebrachten Luftkathode sowie gegebenenfalls dem auf die Luftkathode aufgebrachten Separator mit der metallbasierten Anode kombiniert. Es ist bevorzugt, dass die metallbasierte Anode hierzu auf ein Trägersubstrat aufgebracht wird, gegebenenfalls ein mit elektrischen Leiterstrukturen versehenes Trägersubstrat, bevor sie mit dem hydrophoben Kunststoffsubstrat samt der darauf aufgebrachten Luftkathode kombiniert wird.

In weiteren bevorzugten Ausführungsformen kommt eine mit einem Separator abgedeckte, auf dem Trägersubstrat angeordnete metallbasierte Anode zum Einsatz und wird mit dem hydrophoben Kunststoffsubstrat samt der darauf aufgebrachten Luftkathode kombiniert wird. In diesem Fall muss die Luftkathode selbst nicht zwingend mit einem eigenen Separator abgedeckt werden.

Es ist natürlich auch denkbar, dass der Separator als separates Bauteil bereitgestellt und bei der Kombination der metallbasierten Anode mit dem hydrophoben Kunststoffsubstrat samt der darauf aufgebrachten Luftkathode zwischen der Luftkathode und der metallbasierten Anode angeordnet wird.

In aller Regel benötigt die herzustellende Metall/Luft-Zelle einen flüssigen Elektrolyten. Bei diesem kann es sich insbesondere um eine Lauge, beispielsweise um Kalilauge, handeln. Es sind aber auch neutrale oder nahezu neutrale wässrige Elektrolyten einsetzbar, beispielsweise Ammoniumchlorid- oder Zinkchlorid-Lösung.

Im Betrieb sind die Elektroden und der Separator einer Metall/Luft-Zelle üblicherweise mit dem Elektrolyten getränkt.

Bei dem Trägersubstrat, auf dem die metallbasierte Anode angeordnet werden kann, handelt es sich bevorzugt um eine Kunststofffolie oder eine Kunststoffverbundfolie. Derlei Folien sind als Gehäusematerialien für elektrochemische Zellen bekannt. Geeignete Kunststoffverbundfolien umfassen häufig eine Lage aus Metall sowie zwei Lagen aus Kunststoff, wobei die Lage aus Metall zwischen den beiden Kunststofflagen angeordnet ist.

Die Folie weist bevorzugt keine oder nur wenige Mikroporen auf. Bevorzugt ist sie nahezu undurchlässig für Luftsauerstoff sowie für den Elektrolyten.

In besonders bevorzugten Ausführungsformen wird das Trägersubstrat mit dem hydrophoben Kunststoffsubstrat verbunden, beispielsweise durch Verschweißung oder Verklebung, so dass ein Gehäuse gebildet wird, in dem die Luftkathode und die metallbasierte Anode und der Separator eingeschlossen sind. Die in dem Gehäuse angeordnete Luftkathode kann elektrisch über das hydrophobe Kunststoffsubstrat bzw. die darin eingebettete metallische Leiterstruktur kontaktiert werden. Zur Kontaktierung der metallbasierten Anode kann beispielsweise auf die ins Innere des Gehäuses weisende Seite des Trägersubstrats eine elektrische Leiterstruktur aufgebracht werden, beispielsweise mittels eines Druckverfahrens.

Jede gemäß dem beschriebenen Verfahren herstellbare Metall/Luft-Zelle ist Gegenstand der vorliegenden Erfindung.

Eine erfindungsgemäße Metall/Luft-Zelle umfasst stets das hydrophobe Kunststoffsubstrat, das an einer seiner Oberflächen die beschriebene offen liegende metallische Leiterstruktur aufweist, sowie die Luftkathode, die auf der Oberfläche mit der metallischen Leiterstruktur angeordnet ist und die in unmittelbarem Kontakt mit der offen liegenden metallischen Leiterstruktur steht.

In der Regel zeichnet sich die erfindungsgemäße Metall/Luft-Zelle durch mindestens eines der folgenden Merkmale aus:
- Die positive Elektrode ist rechteckig oder quadratisch ausgebildet.
- Die negative Elektrode ist rechteckig oder quadratisch ausgebildet.
- Der Separator ist rechteckig oder quadratisch ausgebildet.
- Die positive Elektrode weist eine Breite im Bereich von 0,2 mm bis 10 cm und eine Länge im Bereich von 0,2 mm bis 20 cm auf.
- Die negative Elektrode weist eine Breite im Bereich von 0,5 cm bis 10 cm und eine Länge im Bereich von 0,5 cm bis 20 cm auf.
- Der Separator weist eine Breite im Bereich von 0,6 cm bis 12 cm und eine Länge im Bereich von 0,6 cm bis 22 cm auf.
- Die Luftkathode weist eine Dicke im Bereich von 2 µm bis 200 µm auf.
- Die negative Elektrode weist eine Dicke im Bereich von 10 µm bis 200 µm auf.
- Der Separator weist eine Dicke im Bereich von 10 µm bis 100 µm auf.
- Das hydrophobe Kunststoffsubstrat, das an einer seiner Oberflächen eine offen liegende metallische Leiterstruktur aufweist, weist eine Dicke im Bereich von 10 µm bis 100 µm auf.

Weitere Merkmale, Einzelheiten und Vorzüge der Erfindung ergeben sich aus den Ansprüchen und der Zusammenfassung, derer beider Wortlaut durch Bezugnahme zum Inhalt der Beschreibung gemacht wird, der folgenden Beschreibung bevorzugter Ausführungsformen der Erfindung sowie anhand der Zeichnungen. Hierbei illustrieren, jeweils schematisch:
Fig. 1 die Bildung des erfindungsgemäß verwendeten hydrophoben Kunststoffsubstrats, das an einer seiner Oberflächen eine offen liegende metallische Leiterstruktur aufweist und
Fig. 2 im Querschnitt eine Ausführungsform einer Metall/Luft-Zelle, in der das gemäß Fig. 1 hergestellte Kunststoffsubstrat verbaut ist.

Zur Herstellung des hydrophoben Kunststoffsubstrats mit der offen liegenden metallischen Leiterstruktur 110 wird im Schritt A als hydrophobes Kunststoffsubstrat 107 eine mikroporöse Teflonfolie bereitgestellt. Diese wird gleichzeitig mit einem Band aus einem nickelbasierten Streckmetall 110 in eine Walzvorrichtung eingespeist. In der Walzvorrichtung wird das Streckmetall in die Folie eingewalzt. Das Resultat ist in B dargestellt. Das Streckmetall 110 ist in die Folie 107 als metallische Leiterstruktur eingebettet, tritt jedoch an mehreren Stellen 110a offen zutage. An diesen Stellen kann es unmittelbar mit einer in C dargestellten Luftkathode 102 in Kontakt treten, die mittels eines Druckverfahrens auf die Teflonfolie aufgebracht wurde.

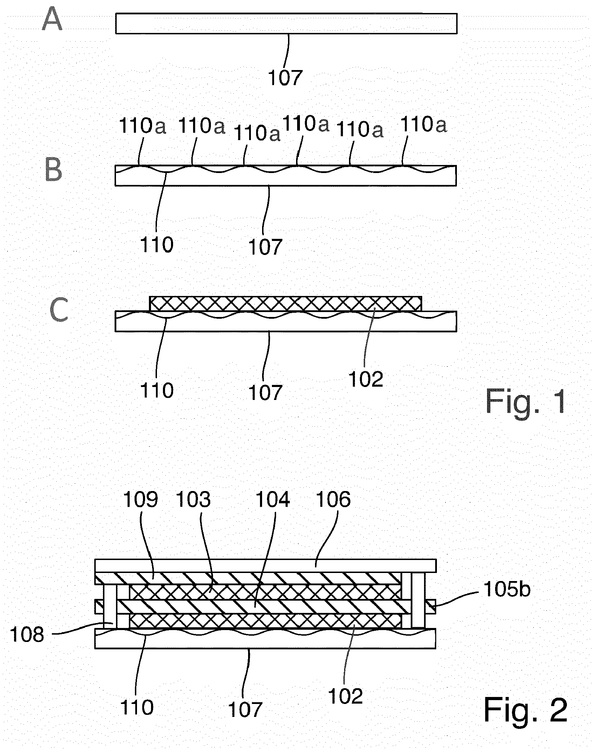

Die in Fig. 2 abgebildete Metall/Luft-Zelle umfasst anodenseitig die Kunststofffolie 106 sowie die auf diese aufgedruckte metallische Leiterstruktur 109. Die Leiterstruktur 109 steht mit der metallbasierten Anode 103 unmittelbar in Kontakt. Kathodenseitig ist das hydrophobe Kunststoffsubstrat 107 zu sehen, das die metallische Leiterstruktur 110 aufweist, die in das Substrat 107 eingebettet ist, allerdings an einer Oberseite offen liegt und dort in unmittelbarem Kontakt mit der Luftkathode 102 steht, die mittel eines Druckverfahrens auf das hydrophobe Kunststoffsubstrat 107 aufgebracht wurde. Die Anode 103 und die Luftkathode 102 sind durch den Separator 104, bei dem es sich um ein Vlies handelt, voneinander getrennt. Die Elektroden 102 und 103 und der Separator 104 sind mit einem alkalischen Elektrolyten getränkt. Das hydrophobe Kunststoffsubstrat 107 und die Folie 106 sind durch einen Kleberahmen 108 miteinander verbunden und bilden ein Gehäuse, in dem die Elektroden 102 und 103 und der Separator 104 angeordnet sind.

## Patentansprüche

1. Verfahren zum Herstellen einer Metall/Luft-Zelle mit einer metallbasierten Anode (103) und einer Luftkathode (102) mit den Schritten
a. Es wird ein hydrophobes Kunststoffsubstrat (107) gebildet, das an einer seiner Oberflächen eine offen liegende metallische Leiterstruktur (110) aufweist, und
b. Auf der Oberfläche mit der metallischen Leiterstruktur (110) wird die Luftkathode (102) gebildet.

2. Verfahren nach Anspruch 1 mit den folgenden zusätzlichen Schritten:
a. Als hydrophobes Kunststoffsubstrat (107) wird ein schichtförmiges hydrophobes Kunststoffsubstrat bereitgestellt.
b. Das schichtförmige hydrophobe Kunststoffsubstrat ist als Vlies, als Gewebe oder als Folie ausgebildet, insbesondere als hydrophobe Kunststofffolie.
c. Zur Bildung der metallischen Leiterstruktur (110) wird ein metallisches Netz oder Gitter bereitgestellt.
d. Das metallische Netz oder Gitter wird in die hydrophobe Kunststofffolie eingepresst.

3. Verfahren nach Anspruch 1 oder Anspruch 2 mit mindestens einem der folgenden zusätzlichen Schritte:
a. Die Luftkathode (102) wird mittels eines Druckverfahrens gebildet.
b. Bei dem Druckverfahren handelt es sich um einen Siebdruckprozess.
c. Die Luftkathode (102) wird aus einer Druckpaste gebildet, die ein elektrokatalytisch aktives Material umfasst.
d. Die Druckpaste umfasst neben dem elektrokatalytisch aktiven Material ein Leitmittel.
e. Die Druckpaste umfasst neben dem elektrokatalytisch aktiven Material einen Elektrodenbinder.

4. Verfahren nach einem der vorhergehenden Ansprüche mit mindestens einem der folgenden zusätzlichen Schritte:
a. Auf die Luftkathode (102) ein Separator (104) aufgebracht.
b. Der Separator (104) wird auf die Luftkathode (102) aufgedruckt.
c. Der Separator (104) wird als separates Bauteil bereitgestellt und auf die Luftkathode (102) aufgelegt.

5. Verfahren nach einem der vorhergehenden Ansprüche mit mindestens einem der folgenden zusätzlichen Schritte:
a. Das hydrophobe Kunststoffsubstrat (107) samt der darauf aufgebrachten Luftkathode (102) sowie gegebenenfalls dem auf die Luftkathode (102) aufgebrachten Separator (104) wird mit der metallbasierten Anode (103) kombiniert.
b. Die metallbasierte Anode (103) wird auf ein Trägersubstrat (106) aufgebracht, bevor sie mit dem hydrophoben Kunststoffsubstrat (107) samt der darauf aufgebrachten Luftkathode (102) kombiniert wird.
c. Die metallbasierte Anode (103) auf dem Trägersubstrat (106) wird mit einem Separator (104) abgedeckt, bevor sie mit dem hydrophoben Kunststoffsubstrat (107) samt der darauf aufgebrachten Luftkathode (102) kombiniert wird.
d. Der Separator (104) wird als separates Bauteil bereitgestellt und bei der Kombination der metallbasierten Anode (103) mit dem hydrophoben Kunststoffsubstrat (107) samt der darauf aufgebrachten Luftkathode (102) zwischen der Luftkathode (102) und der metallbasierten Anode (103) angeordnet.

6. Verfahren nach Anspruch 5 mit mindestens einem der folgenden zusätzlichen Schritte:
a. Das Trägersubstrat (106) ist eine Kunststofffolie oder eine Kunststoffverbundfolie.
b. Das Trägersubstrat (106) wird mit dem hydrophoben Kunststoffsubstrat (107) verbunden, so dass ein Gehäuse gebildet wird, in dem die Elektroden (102; 103) und der Separator (104) eingeschlossen sind.

7. Metall/Luft-Zelle mit einer metallbasierten Anode (103) und einer Luftkathode (102) mit den Merkmalen
a. Die Metall/Luft-Zelle umfasst ein hydrophobes Kunststoffsubstrat (107), das an einer seiner Oberflächen eine offen liegende metallische Leiterstruktur (110) aufweist, und
b. Die Luftkathode (102) ist auf der Oberfläche mit der metallischen Leiterstruktur (110) angeordnet und steht in unmittelbarem Kontakt mit der offen liegenden metallischen Leiterstruktur (110).
